# EUROPEAN PATENT APPLICATION

(11) **EP 1 024 568 A2**
(43) Date of publication of application: **02.08.2000**
(21) Application number: 00660011.8
(22) Date of filing: 20.01.2000
(51) Int. Cl.: H02B 1/32

(54) **Mounting plate**

(30) Priority: 27.01.1999 FI 990151
(71) Applicant: ABB Control OY, 65320 Vaasa (FI)
(72) Inventor: Kemppainen, Esko, FIN-65320 Vaasa (FI); Juhola, Ahti, FIN-65370 Vaasa (FI)
(74) Representative: Niemi, Hakan

(57) **Abstract**

The present invention relates to a mounting plate (9) to be used when an equipment cabinet (1) is equipped. The equipment cabinet comprises a frame (2), a surface, at least one equipment space enclosed by the surface and at least one door (6) closing the equipment space. The mounting plate is arranged into the equipment cabinet to receive various components to be installed in the cabinet. An object of the present invention is to provide a completed equipment cabinet having outer dimensions which are essentially smaller than in the prior art, such cabinets joined together forming an essentially shorter assembly. For this purpose the mounting plate (9) is arranged to comprise at least two planar members arranged at an angle in relation to each other, i.e. a base plane (12) and a side plane (13). The base plane is arranged to be fixed substantially immovably to the equipment space of the equipment cabinet, the side plane being arranged to extend into the equipment space. Therefore at least some of the components to be mounted on the mounting plate can be arranged into a more advantageous position than before because they can be mounted on the base extending into the equipment space of the equipment cabinet.

## Description

### FIELD OF THE INVENTION

The invention relates to a device according to the preamble of claim 1. The device is used particularly when low voltage assemblies are equipped, an assembly being formed by a plurality of equipment cabinets put together to form a larger entity.

### BACKGROUND OF THE INVENTION

It is known in the art that an equipment cabinet forming part of a larger assembly and comprising a frame, surface plates, equipment compartments of different sizes and doors closing the compartments, is provided with planar mounting plates, the devices and connectors needed by separate outputs for energy distribution or the starting up of a motor being attached to the plates. A fully equipped output is called a supply unit or a feed unit, the unit being fixed to bus bars arranged in the cabinet. The supply unit can be arranged behind a separate door into the cabinet, and, when several output units are used, they can all be placed behind one common door.

The equipment cabinet usually comprises a cable space, arranged next to the supply unit, for the laying and fixing of cables to be connected to the supply units. Instead of the cable space, a separate cable field provided with a separate door can be arranged at one side of the supply unit or the equipment cabinet for the laying and fixing of the cables.

However, the known solutions have significant disadvantages. For example, the devices to be arranged into the cabinet and the connectors for the supply unit's main circuit and control circuit have conventionally been mounted to the same level, onto a planar mounting plate. Furthermore, a separate wall plate is often arranged inside the cabinet to separate the mounting plate from the cable space, or switching space, arranged for the cabling.

When the above-described conventional planar mounting plate is used to equip the equipment cabinet, the devices and connectors mounted on the plate require a considerable amount of space, thus disadvantageously increasing the width of the cabinet. A plural number of such equipment cabinets put together to form, for example, a low voltage assembly, increases the length of the assembly row. In addition, when a supply unit mounted onto a conventional mounting plate is to be separated with a partitioning wall from the cable space inside the cabinet, a considerable amount of extra work is required because connectors have to be separately mounted onto the wall, which makes the mounting work more complicated and slower. Furthermore, mounting work carried out in such narrow spaces separated by walls increases the risk of faulty switching.

### BRIEF DESCRIPTION OF THE INVENTION

An object of the present invention is to avoid the disadvantages of the prior art and to provide a completely novel solution that allows the equipment cabinet to be significantly more efficiently equipped, the equipment cabinet being also made substantially narrower in its outer dimensions and the cabinets joined together providing a substantially shorter assembly.

The object is achieved with a mounting plate that has the characteristics of the invention as defined in the claims. More specifically, the equipment of the invention is primarily characterized by what is stated in the characterizing part of claim 1.

The preferred embodiments of the invention are disclosed in the dependent claims.

The invention is based on the idea that the connecting means, such as different connectors, included in the cabinet equipment and needed for the outward or inward cables are arranged substantially perpendicularly in relation to the equipment plane of a conventional equipment cabinet. The connecting means mounted between the devices and the cable space at the same time advantageously separate the cable space from the other equipment in the cabinet. To provide the described arrangement, the mounting plate of the invention, which receives the devices, connecting means or other similar means, is bent at an angle which allows the devices, for example, to be fixed to a side plane bent at an angle of 90°, for example, in relation to the base plane. The connectors in the equipment cabinet can also be advantageously fixed to the cable space side of the side plane.

Another possibility is that two mounting plates of the invention are symmetrically arranged next to each other in the equipment cabinet, cable spaces for outward wires being left at both sides of the equipment cabinet.

The side plane of the mounting plate of the invention is preferably bent and dimensioned in such a way that, together with the connecting means mounted in the direction of the cabinet's depth, the side plane forms a wall partitioning the equipment space from the cable space, a switching space to be furnished with a separate door being thus provided in the cabinet. When a plural number of mounting plates are arranged into the cabinet one on top of the other, the side planes form a continuous partitioning wall along the entire equipment, thus allowing cables to be safely and conveniently connected to protected connecting means.

The invention provides significant advantages. The mounting plate of the invention significantly facilitates mounting work. An individual output can be equipped and wired more rapidly and easily because connecting means placed to the cabinet space side, for example, can be more conveniently arranged on the mounting plate. In fact, the mounting plate can be equipped completely outside the equipment cabinet, as a separate efficient work phase, a completely equipped and tested supply unit being then arranged into the equipment space. The outward portion of the mounting plate also significantly facilitates the switching made to the connecting means.

A side plane comprising a plural number of parallel plate portions can be easily composed in such a way that the connecting means arranged to the side plane are always in an optimum position with regard to their cabling.

A mounting plate provided with a lead-through gasket offers a particularly simple way of fixing the main electrical conductors of certain apparatuses to apparatuses mounted directly onto the base plane.

Furthermore, with the mounting plate, fewer parts are needed in the mounting work, which reduces the outer dimensions of the equipment. Due to the smaller dimensions, a smaller mounting space needs to be reserved for the equipment, which in turn reduces building costs. Savings are also achieved in the packaging, transport and final mounting of the completed equipment delivered to the subscriber.

### BRIEF DESCRIPTION OF THE DRAWINGS

In the following the invention will be described with reference to the accompanying drawings, in which
Figure 1 illustrates an arrangement of a mounting plate of the invention into an equipment cabinet shown by way of example;
Figure 2 illustrates an embodiment of the mounting plate of the invention with a uniform side plane;
Figure 3 illustrates an embodiment of the mounting plate of the invention where the side plane comprises a lead-through plate for cables, the plate providing shielding from contact;
Figure 4 illustrates a particular embodiment of the mounting plate of the invention where the side plane comprises a mounting surface for receiving connecting means of external wires, with at least some of the connecting means arranged to the mounting surface, and
Figure 5 illustrates an embodiment of the mounting plate of the invention where the base plane and the side plane are turnably arranged in relation to each other.

### DETAILED DESCRIPTION OF THE INVENTION

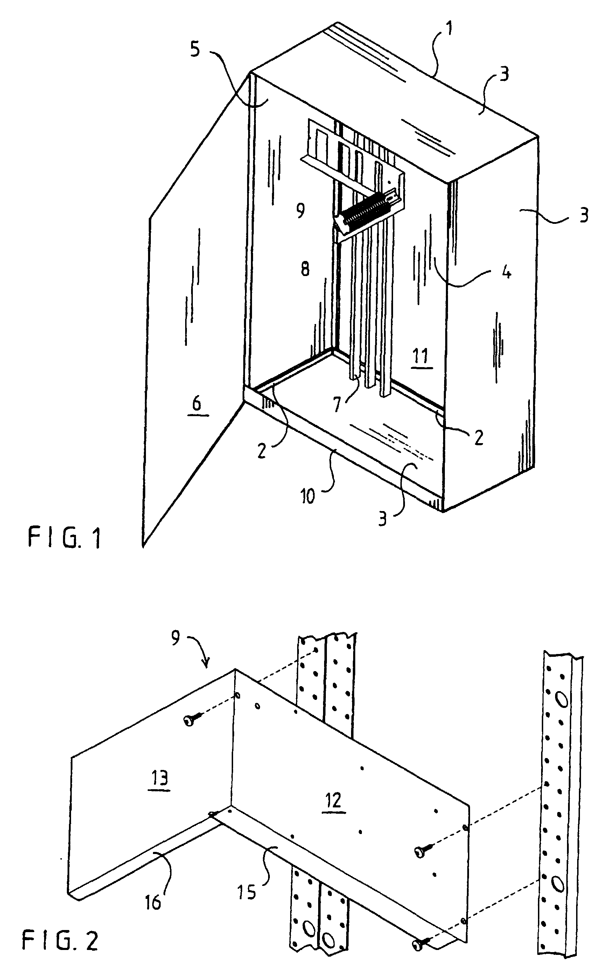

Figures 1 and 2 illustrate a preferred embodiment of the invention. In this case the invention relates to one or more equipment cabinets 1 forming an assembly, the equipment cabinet comprising a frame 2, surface plates 3 fixed to the frame and substantially surrounding the device, an equipment space divided into a cable space 4 and an instrument space 5, and at least one door 6 closing the equipment space. When necessary, the equipment space can be divided into several blocks arranged one on top of the other by means of compartment plates arranged into the equipment space.

Various devices or assemblies and bus rails 7 for conducting electricity to them, together with connecting means 8, if any, are mounted into the equipment cabinet. The devices, assemblies and connecting means are arranged into the cabinet onto a mounting plate, the mounting components together forming what is known as a supply or feed unit. The mounting plate is conventionally arranged as shown in Figure 1 with regard to a front wall 10 and a back wall 11 of the equipment cabinet, the bus rails being substantially enclosed in the space between the mounting plate and the back wall. The equipment cabinet further comprises electric conductors interconnecting the supply unit and the bus rails, and conductors for interconnecting external main current and control current circuits to the connecting means.

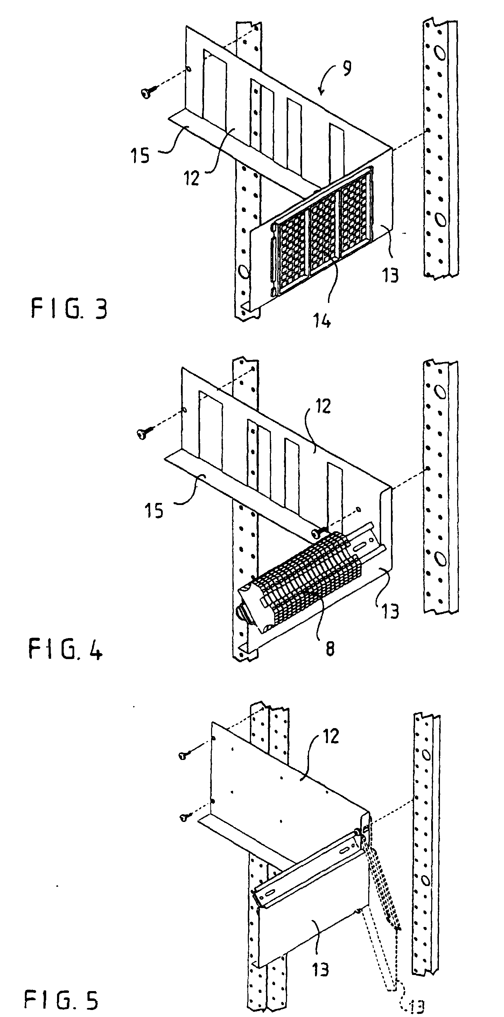

As shown in the Figures, the mounting plate of the invention comprises at least two portions attached to each other, i.e. a base plane 12 and a side plane 13 arranged at an angle in relation to the base plane. When the described mounting plate is used, the devices or assemblies are usually arranged onto the base plane, whereas the connecting means of the supply unit can be arranged into a better position than before onto a base extending into the equipment space of the equipment cabinet, for example as shown in Figure 4, thus reducing the total width of the equipment cabinet. The at least one outward portion of the mounting plate extending into the equipment space also considerably facilitates the mounting of the connecting means, as well as the switching involved. At the same time the arrangement provides a simple and a cost-effective means for separating the devices mounted onto the base plane from the cable space 4. Nothing prevents the devices or assemblies from being arranged even to the side plane surface facing the equipment space. Furthermore, the side plane can be separately shaped to ensure that the connecting means are mounted into an optimal position for cabling. For example, the side plane 13 can be arranged to comprise a plural number of parallel plate strips, the side plane being thus provided with a mounting surface which is at an angle to the side plane for receiving the mounting rail of a terminal block serving as the connecting means 8.

A mounting plate 9 where the base plane 12 and the side plane 13 are made of one and the same plate, the side plane being formed by bending the plate into an angle, allows the supply unit incorporating the connecting means to be equipped completely separately from the equipment cabinet. In addition, this allows the supply unit to be tested in a most advantageous manner outside the equipment cabinet.

In a preferred embodiment of the mounting plate 9 of the invention, the side plane 13 is arranged to function both as a mounting base for the connecting means 8 to be fixed to it and as a partition in the equipment space of the cabinet. In this case the side plane is arranged to extend into the entire depth of the equipment space, all the way from the back wall 11 of the equipment cabinet to its front wall 10, or substantially to the level of the front wall. The side plane thus divides the equipment space into a cable space 4 and an instrument space 5 in a simple manner, without any particular structural parts being needed. The shielded connecting means, which interconnect the main current circuit and the control current circuit with the supply unit, being at least substantially arranged to the described side plane of the mounting plate of the invention in such a way that they are on the cable space 4 side of the side plane allows cables to be easily and safely connected to the shielded connecting means in the cable space.

In another preferred embodiment of the invention, the base plane 12 or the side plane 13 can be provided with openings into which devices, equipment components or connecting means are arranged when necessary. The openings can also be provided with for example rubber or plastic lead-through gaskets known per se, which can be used for connecting the main electrical conductors of certain devices directly to devices mounted on the base plane. A mounting plate 9 provided with openings as described above or one formed of thin plates can be stiffened by bending a narrow edge 15 and 16 at the top or bottom edges of the mounting plate parts, the planes thus comprising at least two parallel plate strips.

When necessary, the mounting work can also be facilitated by providing a mirror image version of the mounting plate 9. The equipment cabinet can in this case be equipped for example in such a way that the mounting plates are symmetrically arranged into the equipment space, the bus rails 7 being arranged between the mounting plates and the back wall 11, or the mounting plates being arranged on both sides of common current rails provided between the plates. Alternatively, a similar structure can be produced by a mounting plate bent at opposite edges to side planes 13 facing each other, thus allowing the devices of even two separate supply units to be mounted on one and the same mounting plate. According to a particular embodiment of the invention, similar bent edges as on the side plane can also be arranged to the base plane portion of the mounting plate, for example to surround the bus rails located behind the mounting plate, or to simplify the mounting work to be performed at the bus rails. In this case the mounting plate is provided with one or more V-shaped or rectangular ridges opening towards the back wall 11 and arranged for example at the center of the base plane. When necessary, such ridges, arranged either in a transverse or longitudinal direction of the mounting plate of the invention, can be used to stiffen the plate.

Figure 5 shows a preferred embodiment in which the base and side planes can be turnably arranged, pivoted for example, with regard to each other, thus allowing the side plane to be turned to an optimum position for mounting. The side plane can be locked to a fixed position with regard to the base plane for example by means of a support arm arranged between the base plane and the side plane, or a latch arranged to the cabinets front wall or its frame.

It is to be understood that as technology advances the basic idea of the invention can be implemented in various different ways. The above specification and the related drawings are therefore only meant to illustrate the invention disclosed. The invention is thus not limited to the above specification or to the embodiment disclosed in the claims, but a person skilled in the art will find it apparent that many variations and modifications of the invention are possible within the inventive idea defined in the accompanying claims.

## Claims

1. A mounting plate (9) to be used when an equipment cabinet (1) is equipped, the cabinet comprising a frame (2), a surface, at least one equipment space enclosed by the surface and at least one door (6) closing the equipment space, the mounting plate being arranged into the equipment cabinet to receive components to be installed in the equipment space, **characterized** in that the mounting plate (9) comprises at least two planar members arranged at an angle in relation to each other, i.e. a base plane (12) and a side plane (13), the base plane being arranged to be fixed substantially immovably into the equipment space of the equipment cabinet, the side plane being arranged to extend into the equipment space.

2. Amounting plate (9) according to claim 1, **characterized** in that, in its longitudinal direction, the side plane (13) comprises at least two parallel planar plate surfaces, adjacent plate surfaces being arranged at an angle in relation to each other.

3. A mounting plate (9) according to claim 1 or 2, **characterized** in that the plate is made of a single planar piece.

4. A mounting plate (9) according to claim 1 or 2, **characterized** in that the base plane (12) and/or the side plane (13) are provided with openings to receive at least some of the components to be arranged to the mounting plate.

5. A mounting plate (9) according to any one of the preceding claims, **characterized** in that the base plane (12) and the side plane (13) are turnably arranged in relation to each other.

6. A mounting plate (9) according to claim 5, **characterized** in that the side plane (13) can be immovably arranged in relation to the base plane (12).

7. A mounting plate (9) according to any one of the preceding claims, **characterized** in that the side plane (13) is arranged to extend from the back wall (11) of the equipment cabinet (1) to its front wall (10), the side plane dividing the equipment space into an instrument space (5) and a cable space (4).

8. A mounting plate (9) according to any one of the preceding claims, **characterized** in that mounting plates (9) are arranged substantially symmetrically side by side with each other in the equipment space of the equipment cabinet (1).

9. A mounting plate (9) according to any one of the preceding claims, **characterized** in that the side plane (13) comprises lead-through gaskets (14) allowing wires to be laid into the equipment space of the equipment cabinet (1) in such a way that no mechanical damage is caused to the wires and the sealing between the equipment space and the cable space is ensured.

10. A mounting plate (9) according to any one of the preceding claims, **characterized** in that the connecting means to be arranged to the side plane (13) can be arranged at the cable space side of the plane.

11. A mounting plate (9) according to any one of the preceding claims, **characterized** in that the mounting plate can be equipped separately from the equipment cabinet (1).
